# EUROPEAN PATENT APPLICATION

(11) **EP 2 642 269 A2**
(43) Date of publication of application: **25.09.2013**
(21) Application number: 13172969.1
(22) Date of filing: 09.09.2005
(51) Int. Cl.: G01M 3/36

(54) **Methods for manufacturing unleaky closed containers and leak testing apparatus**

(62) Divisional of application: 05777631.2
(71) Applicant: Wilco AG, 5610 Wohlen (CH)
(72) Inventor: Lehmann, Martin, 5610 Wohlen (CH)
(74) Representative: Troesch, Jacques J.

(57) **Abstract**

The present inventions concerns the manufacturing and testing of unleaky closed containers (1) with a first and a second flexible wall (3a, 3b) area having different flexibility characteristics, wherein
- a closed container (1) is provided;
- at least one biasing member (5a, 5b) is moved towards and onto one of the first and second flexible wall areas (3a, 3b) of the container (1);
- a biasing force on the container is monitored by a force detector (9);
- the moving is stopped;
- the biasing force monitored is sampled resulting in a first force measuring signal at a first point in time;
- the biasing force monitored is sampled at least at one second subsequent point in time resulting in a second force measuring signal;
- a difference signal is generated in dependency of the first and second force measuring signals;
- the container is considered unleaky if the difference signal fulfils a test criterium;
- moving the biasing member towards and onto the first flexible wall area;
- monitoring the biasing force at the second flexible area;
- sampling of the biasing force monitored resulting in the first measuring signal.

## Description

The present invention departs from a technique of manufacturing unleaky containers as disclosed in the WO 00/073760 or US patent 6 557 395, 6 439 032 or 6 840 087 all of the same applicant as the present invention.

Thereby for manufacturing unleaky containers which have a first flexible wall area and a second flexible wall area of different flexibility characteristics the present invention is a manufacturing method wherein after having provided a closed container, at least one a biasing member is moved towards and onto one of the first and second flexible wall areas of the container. Such biasing moving is stopped. A biasing force on the container is monitored and the biasing force as monitored is sampled resulting in a first force measuring signal at a first point in time. The addressed biasing force as monitored is further sampled at least at one second subsequent point in time which results in a second force measuring signal. A difference signal is generated in dependency of the first and second force measuring signals. The addressed container is considered unleaky if the difference signal fulfils a test criterium. Thereby the biasing member is moved towards and onto the first flexible wall area of the container and monitoring the biasing force is performed at the second flexible area. Sampling of the biasing force monitored which results in the addressed first force measuring signal comprises determining a maximum force signal value having occurred during a time span up to and including the first point in time.

In one embodiment of the addressed method the biasing member is moved up to a predetermined position with respect to the container which is in one embodiment defined by a mechanical stop. Further in one embodiment stopping of the biasing member is performed at least substantially at the first point in time thus at least substantially at that moment at which sampling of the biasing force monitored results in the first force measuring signal.

In one embodiment a predetermined time span is selected and the maximum force value having occurred during this predetermined time span up to and including the first point in time is determined.

In one embodiment biasing comprises moving at least two biasing members towards and onto the first flexible wall area from opposite sides of the container.

In one embodiment the first flexible wall area of the container is a wall area of a body of the container and the second flexible wall area is a sealing cover of an opening of the container body.

Thereby in one embodiment the second flexible area is a foil-like sealing cover of the addressed opening.

In a further embodiment monitoring the biasing force at the second flexible wall area is performed along a force sensing surface which is spaced from the second flexible area by a predetermined amount said second flexible wall area being thereby considered at unbiased condition of the container. This predetermined amount is substantially smaller than a maximum distance which the second flexible wall area may at all bow outwards due to an increased pressure in the closed container.

In one embodiment monitoring the biasing force comprises monitoring by means of a resistance gouge.

In a further embodiment of the addressed method the biasing force as monitored is compared at a third point in time previous to said first point in time with a threshold value and a container is established as having a large leak if the force monitored does not at least reach the threshold value.

In a further embodiment of the manufacturing method a multitude of containers is provided, moving on a conveyor and moving the biasing members, stopping same, monitoring the biasing force, performing the addressed samplings, generating the difference signal and further performing the addressed leaky/unleaky consideration is performed on more than one of the moved containers on the conveyor at least substantially simultaniously.

In a further embodiment the force monitored is compared at a third point in time previous to the first point in time with a threshold value and there is established a container as having no large leak if the force as monitored at the third point in time at least reaches the threshold value. The force value monitored at the addressed third point in time if the threshold value is at least reached is averaged with such force values generated at previously tested containers which have been considered as having no large leak and the threshold value is applied in dependency of a result of such averaging.

In a further embodiment the difference signal is compared with a small-leakage-indicative threshold value.

Still in a further embodiment the difference signal is averaged with such difference signals which have been generated during previous testing of containers having being considered as unleaky, whereby the small-leakage-indicative threshold value is controlled in dependency of the result of such averaging.

Still in a further embodiment there is provided at least one force threshold value and the force monitored is compared with such threshold value whereby the addressed threshold value is updated as a function of comparing result.

The various embodiments as defined above with their specific features may be combined thereby defining for still further embodiments of the method for manufacturing closed unleaky containers with accordingly combined features.

The leak testing apparatus according to the present invention for leak testing a closed container with at least a first and a second flexible wall area of different flexibility characteristics comprises a biasing arrangement for compressing a container under test. It further comprises a force detector which is applicable to the wall of the container under test and which generates an electric output signal. The output of the addressed force detector is operationally connected to a storing unit, the output of which being operationally connected to one input of a comparator unit, the second input thereof being operationally connected to the output of the force detector. The biasing arrangement is positioned so as to bias the first flexible area of the container and the force detector is positioned to cooperate with the second flexible area of the container.

In one embodiment of the apparatus the biasing arrangement comprises at least two relatively movable biasing members relatively movable in a plane. Thereby the force detector has a force sensing surface which detects forces substantially perpendicular to the addressed plane.

In a further embodiment of the apparatus the force detector comprises a resistance gauge.

Still in a further embodiment the biasing arrangement cooperates with a mechanical stop limiting its biasing action upon the container.

Still in a further embodiment of the apparatus the output of the force detector is operationally connected to an input of a maximum value detecting unit.

Still in a further embodiment of the apparatus according to the present invention it comprises a conveyor arrangement for a multitude of the addressed containers. At least two of the addressed biasing arrangement and force detector are provided moving with the conveyor.

The various embodiments of the apparatus may thereby be combined resulting in further embodiments of such apparatus with combined features.

There is further provided a method for manufacturing unleaky closed containers with a first and a second flexible wall area of different flexibility characteristics wherein a closed container is provided and at least one biasing member is moved relatively towards and onto one of the flexible areas of the container. The addressed moving is stopped. The biasing force on said container is monitored. The biasing force as monitored is sampled which results in a first force measuring signal at a first point in time. The biasing force monitored is sampled at least at one second subsequent point in time which results in a second force measuring signal. A difference signal is generated in dependency of the first and the second force measuring signals as a leak indicative signal. An average signal of difference signal as generated during previous testing of containers is updated with the actual difference signal, if the container actually under test is unleaky. The difference signal is thereby compared with at least one threshold signal which threshold signal is controlled in dependency of the addressed average signal. Thereby moving the biasing member is performed relatively towards and onto the first flexible wall area and monitoring the biasing force is performed on the second flexible wall area. Sampling the biasing force monitored which results in the first force measuring signal comprises determining a maximum force signal value which has occurred during a time span up to and including the first point in time.

Still in a further embodiment there is provided a method for manufacturing unleaky closed containers with a first and with a second flexible wall area of different flexibility characteristics. Thereby a closed container is provided and at least one biasing member is moved relatively towards and onto one of said flexible wall areas of the container. The moving is stopped. A biasing force on the container is monitored. The biasing force as monitored is sampled which results in a first force measuring signal at a first point in time. The biasing force monitored is further sampled at least at one second subsequent point in time which results in a second force measuring signal. A difference signal is generated in dependency of the first and second force measuring signals as one leak indicative signal. The biasing force as monitored is further sampled at a further point in time resulting in an actual further force measuring signal which is leak indicatif. An average signal of further force measuring signals is generated during preceeding testing of unleaky containers and such averaged signal is updated with the actual further force measuring signal if the actual further force measuring signal indicates a unleaky container. The difference signal is thereby compared with a thresehold value which depends from the addressed average signal. A container which is indicated as leaky is rejected.

Thereby moving the biasing member is performed relatively towards and onto the first flexible wall area and monitoring the biasing force is performed on the second flexible area. Sampling of the biasing force as monitored which results in the first force measuring signal comprises determining a maximum force signal value having occurred during a time span up to and including the first point in time.

Still in a further embodiment there is provided a method for manufacturing closed containers with a flexible wall portion wherein a closed container is provided and is biased. A biasing force on the container is monitored and from such force as monitored a maximum force value as occurring during a time span is detected. A signal which depends on the addressed maximum force value as detected is stored and compared with a signal dependent on the biasing force as monitored. The container is rejected as leaky in dependency of a result of the addressed comparing.

The invention shall now be further exemplified with the help of figures. These figures show:
- Fig.1: schematically and simplified a closed container being leak tested in the frame of manufacturing such containers being unleaky and according to the present invention;
- Fig.2: an enlarged area of the representation according to fig. 1 showing biasing force monitoring at one of the flexible areas of the container's wall according to fig. 1;
- Fig. 3: qualitatively different force versus time characteristics at containers tested with an apparatus according to the present invention and by a testing procedure in the frame of the manufacturing method according to the present invention;
- Fig. 4: a simplified signal flow/functional block diagram of an apparatus according to the present invention operating according to the leak testing procedure within the frame of the manufacturing method according to the present invention;
- Fig. 5: an embodiment for accurately performing digital signal comparison as applicable at the apparatus according to fig. 4;
- Fig. 6: different courses of force dependent signals over time as encountered at equally unleaky equal containers and as caused e.g. by manufacturing tolerances or varying environmental parameters;
- Fig. 7: an embodiment for generating a time varying threshold value for large leak detection;
- Fig. 8: qualitatively courses of time varying reference and threshold value signals as exploited in some embodiments of the present invention;
- Fig. 9: by means of a simplified functional block diagram evaluating from a leak indicative signal whether a container under test has a small leak or not;
- Fig. 10: for an embodiment of the present invention generating a time varying threshold value for a small leak indication;
- Fig. 11: in a simplified and schematic representation, an inline leak testing apparatus according to the present invention for high-rate container testing as applied in the frame of the manufacturing method according to the present invention, finally selecting only unleaky containers out of a stream of closed containers;

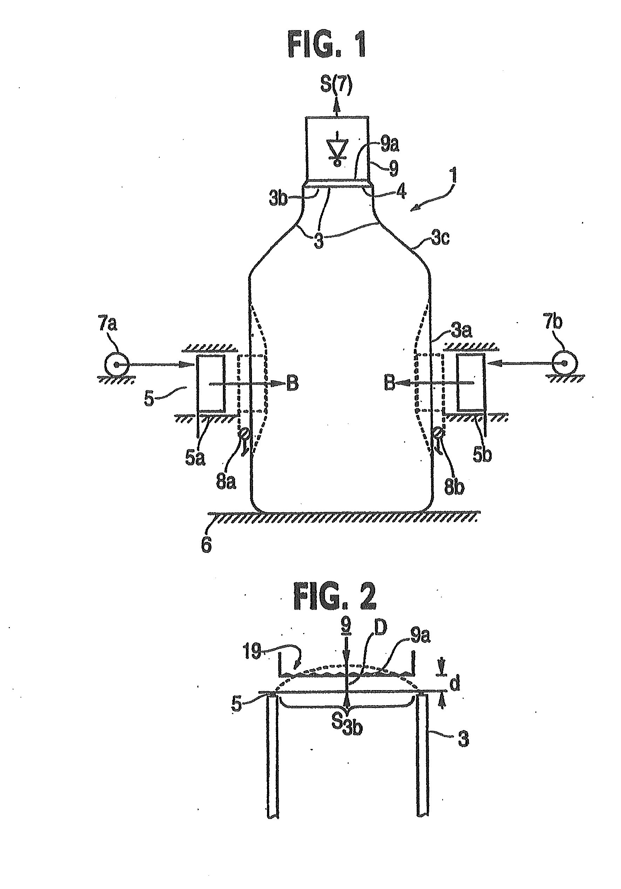

Fig. 1 shows schematically the principal according to the present invention. A closed container 1 to be leak tested e.g. within a production line for finally manufacuring exclusively unleaky containers, has a fist area 3a of its overall wall 3 which is flexible. The opening 4 of container 1 is sealingly closed by a sealing foil-like member, which is a second flexible area 3b of the container's wall 3. The areas 3a and 3b are of different flexible characteristic. As an example and most common the container 1 is a bottle the bottle wall 3c of which being of a plastic material the opening of which being sealed with a foil-like cover 4 which is sealed to the border of the opening 4 of bottle wall 3c e.g. by welding. The foil-like cover is on one hand and as was addressed flexible but substantially non-elastic as made of a metalized plastic foil or a plastified metal foil as of aluminum. In opposition to this second flexible area 3b formed by the addressed sealing foil-like cover the first flexible area 3a of bottle-wall 3c is of thicker plastic material and is more elastic. Thus the addressed first and second areas 3a, 3b of the overall container's wall 3 are of different flexibility characteristics.

For leak testing the container 1 is positioned between two biasing members 5a and 5b of a biasing arrangement 5. The biasing members 5a and 5b are relatively moved towards and from each others to provide a biasing load B on the first flexible area 3a. Thereby in the embodiment as shown in fig. 1 both members 5a and 5b are equally moved towards and from each others and with respect to a mechanic machine reference 6 e.g. a conveyor for the container 1. By moving the members 5a, 5b towards each other the container 1 is squeezed at the area 3a to bow inwardly as shown in dash line. Due to the increased pressure within container 1 caused by the addressed squeezing biasing by biasing arrangement 5, the second flexible area 3b formed by the sealing foil-like member is bowing outwards as also shown in fig. 1 and, in an enlarged representation, in fig. 2. The outwards bowing second flexible area 3b is thereby pressed against the sensing surface 9ₐ of a force detector 9 which is stationary with respect to the mechanical reference 6 of the testing machine. The distance d between the second flexible wall portion 3b formed by the sealing foil-like member and the sensing surface 9a of the force detector 9 is selected much smaller than the maximum distance D the foil-like member may bow outwards due to an increased pressure inside the container 1; in this respect fig. 2 does not show the correct relation of d and D. For a circular area 3b with a radius in the range of 1 or 2 cm the spacing d is selected e.g. to be 0.5 mm. The effect of selecting the spacing d small is that bowing outwards of the second flexible area 3b is limited to such an extent that the sealing link or weld 5 is substantially not mechanically loaded by tensile strength by the outwards bowing.

As further shown in fig. 1 schematically, the relative movement of the biasing members 5a and 5b to squeeze first flexible area 3a is generated by respective drives 7a and 7b and is limited by respective stops 8a and 8b.

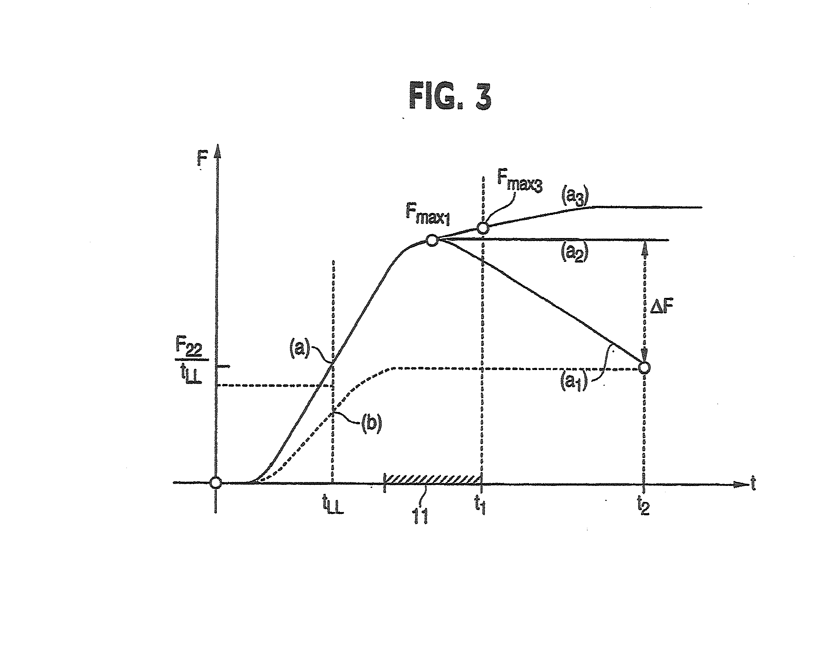

In fig. 3 a qualitative force versus time diagram explaining the inventive method as performed by the inventive apparatus, is shown. At times O according to fig. 3 the biasing movement of the two biasing members 5a and 5b is initiated. Because the characteristic of movement i.e. acceleration and thus speed as generated by the drives 7a and 7b upon the biasing members 5a and 5b is known the time span for moving the biasing members 5a and 5b up to the stops 8a and 8b of fig. 1 is known and shown in fig. 3 by the time span up to t1. When the biasing members 5a and 5b have contacted the first flexible area 3a then, squezzingly bias that area 3a the pressure within container 1, irrespective whether filled with a product or not, rises which leads to the second flexible area 3b formed by the sealing foil-like member being bowed outwards. As soon as the gap with the spacing d is bridged by the outbowing second flexible area 3b and due to still increasing biasing movement of the members 5a and 5b as well as due to the increasing contact surface between the outwards bowing second surface area 3b and the sensing surface 9a of force detector 9, the force F sensed by this stationar force detector 9 increases. At least a part of the course of force over time F(t) up to t1 is monitored. By means of maximum value detection, the maximum value of force as monitored by the force detector 9 up to t1 is determined. Thereby and in one embodiment as shown in fig. 3, by course (a₁) the movement characteristic of the drives 7a and 7b and positioning of the stops 8a and 8b is selected so that the course F(t) as monitored by force detector 9 will reach a maximum value within the time span up to t₁. Nevertheless in fig. 3, purely quantitatively, three positive types of courses F(t) are shown as (a₁), (a₂) and (a₃). If the course substantially accords with (a₁) there is thus determined by maximum value detection up to t₁ the value Fₘₐₓ₁. This course (a₁) is encountered if the container is leaky but has not a larged leak as will be addressed later. The courses F(t) according to (a₂) or (a₃) indicate that the container is either unleaky or has a small leak. If the course accords with (a₂), the maximum force value detected up to t₁ accords with Fₘₐₓ₁. If the course F(t) accords with (a₃) then the maximum force value detected up to the time t₁ is Fₘₐₓ₃.

Irrespective as to when the maximum force value Fₘₐₓ occurs at the time t₁ during the time span O to t₁ this maximum value is detected.

If the container 1 under test has a large leak LL then the course F(t) will be as qualitatively shown by course (b) in fig. 3. To prevent further biasing squeeze by the biasing members 5a and 5b of a large leak container 1 there is established a at least one further predetermined time t_{LL} or time span starting with 0-time, and there is monitored at this time t_{LL} whether the course F(t) of the container under test at least reaches a predetermined force value F_{LL}, If there is detected that at time t_{LL} the threshold force value F_{LL} is not reached as shown by course (b) of fig. 3, then further biasing squeeze by the members 5a and 5b is stopped before having reached their respective stops 8a and 8b so as to prevent squeezing out content of the container 1 through a large leak. If the container 1 under test has not a large leak LL then the maximum force value Fₘₐₓ is detected within the time span up to t₁ irrespective as to the time when such maximum value occurs and irrespective as of its absolute value. Thus different containers without a large leak may lead to maximum force values Fₘₐₓ of different absolute values and such maximum values may occur during the time span up to t₁ at different times.

With respect to determining or detecting the maximum force value Fₘₐₓ from the force versus time course F(t) at a container under test different possibilities are known to the skilled artisan. One straight ahead possibility which also takes courses of the type according to (a₂) and (a₃) into account is to sample and memorize force values of course F(t) and after t₁ has been reached to select the largest force value which has been memorized. This is easily done by analogue to digital conversion of the electric output signal of the force detector 9 and storing in fact the force versus time course by digital samples. Further and following up this technique it is perfectly clear to the skilled artisan that only that part of the time course F(t) be memorized in which the maximum force value Fₘₐₓ is expected to occur. This area of the time course is shown in fig. 3 purely as an example by area M. This reduces the amount of memory necessary to determine the maximum force value Fₘₐₓ.

Considering the generated course (a) which defines for containers without large leak LL we have explained that irrespective of the type of such course as of a₁ to a₃ the maximum force value Fₘₐₓ is determined and is stored. After a predetermined time span t₂ - t₁ a further force measurement is made at the respectively prevailing course and the difference of this force as measured at t₂, F (t₂) to the respective maximum value Fₘₐₓ is evaluated as a small leak indicative signal. Thus for the course (a₁) the difference signal ΔF is generated as indicated in fig. 3 whereas for the courses (a₂) and (a₃) such difference would be zero or negative.

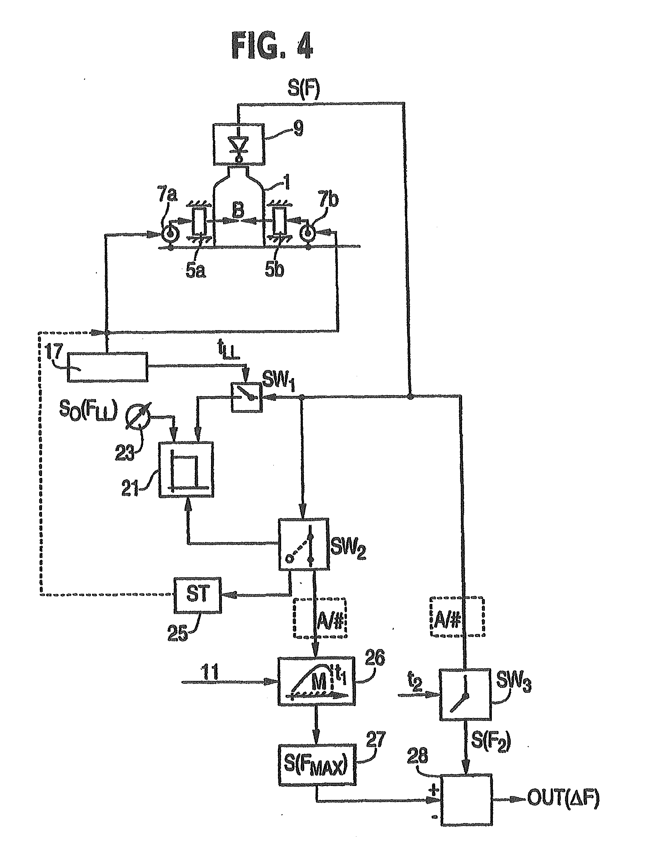

In fig. 4 the inventive apparatus in its principal form which performs the procedure as explained with the help of fig. 3 is schematically shown. Thereby the same reference numbers are used as in the previous figures with respect to features already described. The container 1 to be tested is positioned between the biasing members 5a and 5b which are driven by drives 7a and 7b. The stops 8a, 8b which have been explained in context with fig. 1 are not shown in this figure. A timing unit 17 initiates the biasing movement B of the biasing members 5a and 5b and thereby establishes with an eye on fig. 3 for the zero time O. The force depending electrical output signal S(F) of force detector 9 is fed at predetermined time t_{LL}, controlled by the timing unit 17 as schematically shown and by switching unit SW1 to a comparator unit 21. Thus at time moment t_{LL} the output signal S(F) is compared with a large leak indicative threshold value Sₒ(F_{LL}) as generated by unit 23. Whenever at the moment t_{LL} Sₒ(F_{LL}) is not reached by the force signal S(F), switching unit SW₂, the input thereof being operationally connected to S(F) is opened disabling, via a control unit 25 further biasing of container 1 by the biasing members 5a and 5b. If the threshold value Sₒ(F_{LL}) is at least reached by S(F) at the moment t_{LL}, then signal S(F) is led via SW₂ to a storing unit 26 which is enabled during the time span M up to the moment t₁ of fig. 3 so as to store the values of the electric signal S(F) representing the relevant part of the characteristics F(t) as monitored by detector 9. The stored content of the storing unit 26 representing a part of the course F(t) up to t₁, is fed to a maximum detection and storing unit 27 wherein the signal S(Fₘₐₓ) is detected and stored which signal defines for the maximum force Fₘₐₓ which has been detected by force detector 9 up to the moment t₁. At the moment t₂ again controlled by timing unit 17 the maximum value S(Fₘₐₓ) as well as the output signal prevailing at this moment t₂ at the force detector 9, S(F₂), are fed to respective inputs of a comparator unit 28 which generates at its output an output signal OUT (ΔF). The output OUT (ΔF) of comparator unit 28 is indicative of leak small-behaviour of the container 1 under test.

In spite of the fact that the testing method and thus the unleaky-container manufacturing method according to the present invention allows detection of leaks at any part of container's wall 3 it is especially suited for detecting leaks at the most critical parts of containers of the type as has been described in context with fig. 1 namely with a sealing foil-like member which is e.g. welded to the border of the opening 4 of a bottle-like member. Such most critical parts are the addressed welding 5 and the sealing foil-like member per se. To avoid that pressing the sealing foil-like member which forms the second flexible area 3b as of fig. 1 to the sensing surface 9a of force detector 9 a leak which is possibly present in the contacting surface of the sealing foil-like member is clogged in one embodiment the sensing surface 9a is, as schematically shown in fig. 2 provided with a surface structure 19 which may be realized by roughening this surface to a predetermined amount. It is perfectly clear that also the contact surfaces of the biasing members 5a and 5b as well as the surface whereupon container 1 resides may be structured to avoid also there clogging of possibly present leaks.

Instead of evaluating directly the output signal OUT(ΔF) of comparator unit 28 it is possible to control biasing by means of the biasing members 5a and 5b as a function of this output signal thereby removing the stops 8a and 8b as of fig. 1. Thereby a negative feedback control loop is installed (not shown) wherein the comparator unit 28 compares a rated value according to the detected and stored maximum force signal S(Fₘₐₓ) from unit 27 with an instantaneously prevailing signal S(F) and applying as an adjusting unit in the negative feedback control loop the drives 7a and 7b operating the biasing members 5a and 5b so as to minimize the output signal OUT (ΔF) of comparator unit 28. Thereby the control signal applied to the drives 7a and 7b is exploited as a leak indicative signal.

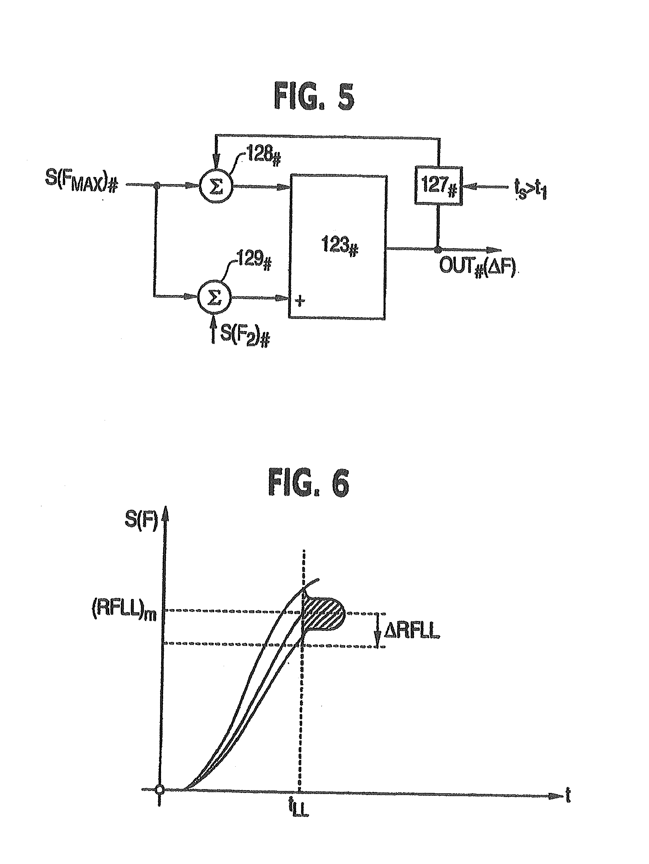

In fig. 5 one realization form of comparator unit 28 is schematically shown. As was addressed above memorizing the relevant part of the force versus time representing signal S(F) as in unit 26 and determining therefrom the maximum value S(Fₘₐₓ) is in one embodiment performed digitally. To do so according to fig. 4 there is installed upstream unit 26 an analogue to digital conversion unit as shown in dash lines. According to fig. 5 the detected digital signal S(Fₘₐₓ)# is fed to one input of a difference forming unit 123#. As schematically shown in fig. 5 e.g. at the time t₁ or later the same stored digital signal S(Fₘₐₓ)# is fed also to the second input of difference forming unit 123#. Thus at this moment the output of the difference forming unit 123_{#} should be zero. If this output signal deviates from zero it is considered as an offset signal and is stored in a storing unit 127# and applied for compensation purposes to the difference forming unit 123_{#} e.g. and as shown in fig. 5 via an adding unit 128# upstream one of the inputs of difference forming unit 123_{#}.

At moment t₂ according to fig.3 the digital signal S(F₂)_{#} (see analogue/digital conversion upstream SW₃ in fig. 4) is added as schematically shown in fig. 5 by adding unit 129# to the still prevailing signal S(F_{max)#}. Thereby the dynamic range of difference forming unit 123# is fully exploited. The same principle may also be realized in analogue signal processing technique.

In fig. 6 there is qualitatively shown the force dependent signal S(F) at the output of force detector 9 measured at containers 1 of the same type with the same measuring equipment which containers 1 have been proven as unleaky. This may have been done by long term experiments and/or with leak detecting systems which are standard and of high accuracy but slow and/or expensive.

At t_{LL} according to fig. 3 the force values measured at these unleaky containers 1 are slightly different and define a statistic distribution. There results an average value (RFLL)ₘ. The threshold value Sₒ(F_{LL}) of fig. 4 is found by substracting from the value (RFLL)ₘ an offset value ΔRFLL the magnitude of which being selected according to the allowed probability that a container which has in fact no large leak is treated as a container having such large leak. Thus the threshold value Sₒ(F_{LL}) of fig. 4 is established in one embodiment and with an eye on fig. 6 by the value (RFLL)ₘ - ΔRFLL.

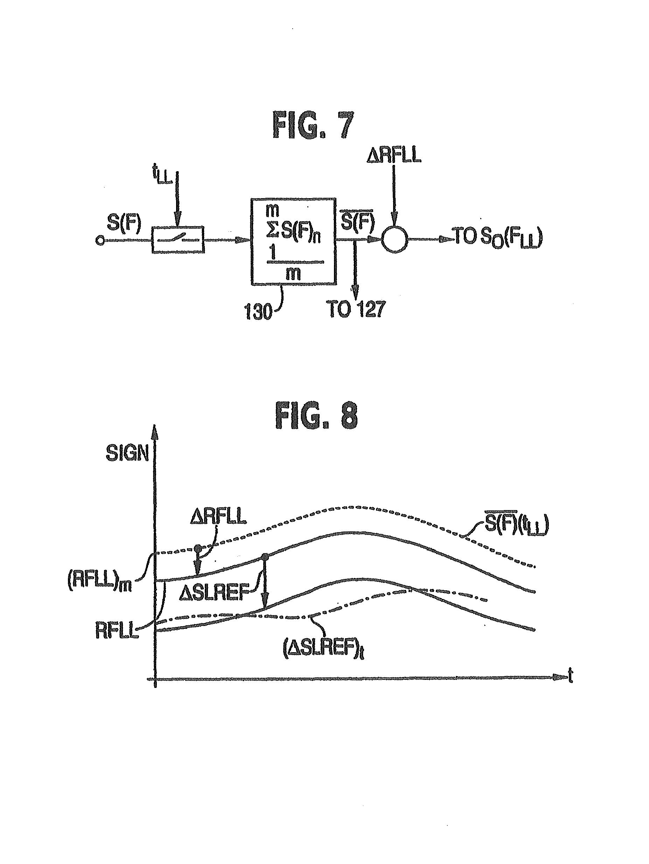

During ongoing operation on series of equal containers 1 temperature and geometry of such containers 1 may vary latter due to manufacturing tolerance. Thereby the value (RFLL)ₘ may slowly change. Every time during multiple successive testing, at the respective times t_{LL} up to which the respective container has been identified as not heavily leaky, the actual output signal of the force detector 9 is entered into an averaging unit 130 as shown in fig. 7. Therein the last m values of the force indicative signal S(F) at t_{LL} of not heavily leaky containers are averaged. The average result signal *̅S̅*̅(̅*̅F̅*̅)̅ accords with the time varying value (RFLL)ₘ of fig.6. From the output average result *̅S̅*̅(̅*̅F̅*̅)̅ the offset ΔRFLL is subtracted and the result of this operation is a dynamically varying reference value applied as Sₒ(F_{LL}) to unit 21 according to fig. 4. This dynamically varying reference value Sₒ(F_{LL}) of fig. 4 is shown in fig. 8 qualitatively starting from an initial setting as e.g. found, as was addressed, with the help of measurements at test containers 1 without large leak.

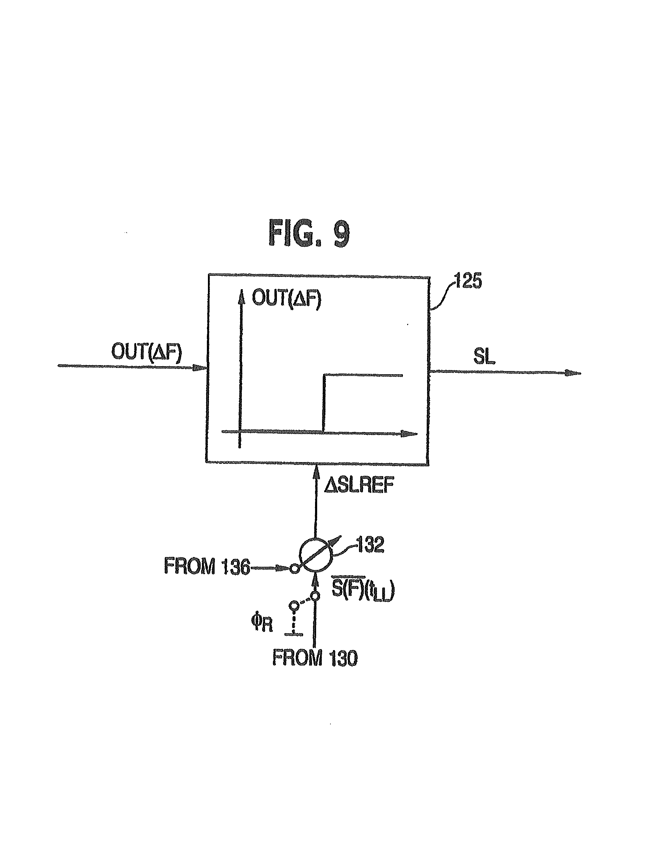

Once the container 1 under test has been found not having a large leak _{LL} as was explained with a help of fig. 4 there is generated at the output of comparator unit 28 an output signal OUT(ΔF) which is indicative for the presence of a small leak. According to fig. 9 the output signal OUT(ΔF) is further evaluated by being fed to a comparator unit 125 which is enabled at or after the time t₂. By means of a reference value source 130 a reference value ΔSLREF is fed to comparator unit 125. As will be explained later the value of ΔSLREF may controllably be varied in time and/or a reference value φ_{R} to which ΔSLREF is referred to, may also controllably be varied in time. If the signal OUT(ΔF) at time t₂ is larger than the reference value ΔSLREF then a signal SL is generated at unit 125 indicating the presence of a small leak SL in the container 1 under test. If the signal OUT(ΔF) does not reach ΔSLREF then the container is considered unleaky as neither a large leak LL nor a small leak SL has been detected.

Turning back to fig. 8 it may be seen that the average signal *̅S̅*̅(̅*̅F̅*̅)̅ (t_{LL}) is also the basis for referring ΔSLREF of fig. 9 to. Thus in one embodiment and as shown in fig. 9 the reference value ΔSLREF is not referred to a static value but is referred to *̅S̅*̅(̅*̅F̅*̅)̅ (t_{LL}), as generated at the output of averaging unit 130 of fig.7.

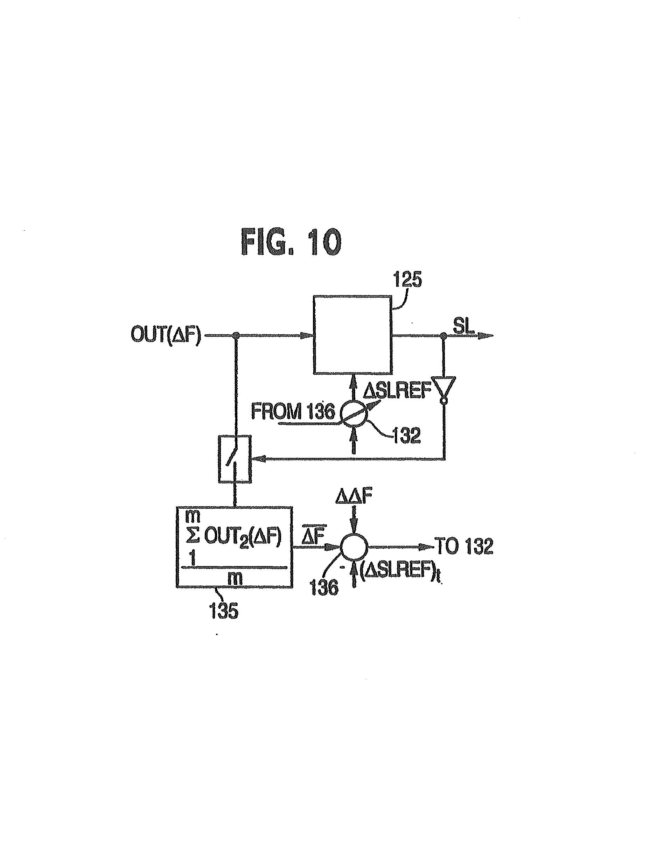

In a further embodiment with features which may be realized separately or additionally to realizing a dynamic Sₒ(F_{LL}) and/or a dynamic base value *̅S̅*̅(̅*̅F̅*̅)̅(t_{LL}) for ΔSLREF. Thereby and according to fig. 10, the actual force difference signal OUT(ΔF) is led to an averaging unit 135 whenever the output signal SL of comparator unit 125 of fig. 9 indicates that the container under test is unleaky. The output signal of unit 135 which accords to an average force difference signal Δ̅F̅ averaged over the last m test cycles is offset by an a0mount ΔΔF, the result thereof being used as a time varying ΔSLREF signal applied at unit 125.

Looking back on fig. 8 whereat a constant ΔSLREF signal was applied the technique of averaging ΔF results as schematically shown with a course (ΔSLREF)ₜ in a dynamically varying value ΔSLREF, varying according to variations of disturbing parameters influencing such force difference. It is clear that provision of a dynamically varying (ΔSLREF)ₜ signal according to that representation in fig. 8 could be realized without providing a dynamically varying base value *̅S̅*̅(̅*̅F̅*̅)̅ (t_{LL}) in referring (ΔSLREF)ₜ to a stable constant value φ_{R} as shown in fig. 9 in dash representations instead of referring to a dynamically varying *̅S̅*̅(̅*̅F̅*̅)̅ (t_{LL}) value.

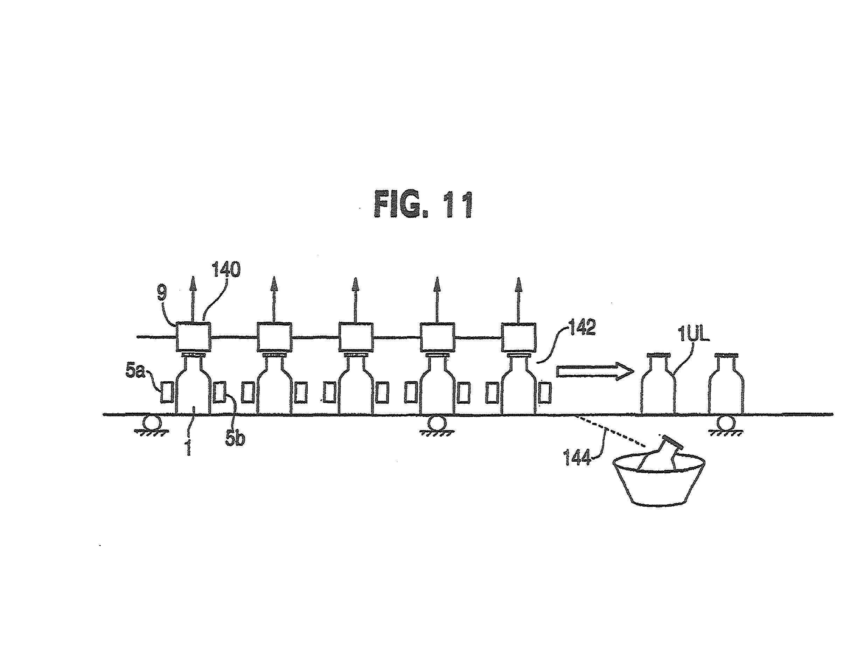

According to fig. 11 a multitude of testing stations 140 are moved with a conveyor arrangement 142 for containers 1 to be tested. During the conveying course of the containers 1 they are brought into the testing stations 140 which keep moving with the conveyor arrangement 142. Each testing unit 140 is construed as has been explained. In the simplified representation of fig. 11 the respective squeezing biasing members 5a and 5b at each testing station are shown as well as the force detectors 9. Without interruption of conveying and the containers 1 become biasingly squeezed by the biasing members 5a and 5b and the resulting force on the respective force detector 9 is evaluated. If a container is detected to be leaky it is separated from the unleaky containers as schematically shown by selecting switch 144 resulting in a train of containers 1_{UL} which are unleaky. Thus the result of container testing is the manufacture of unleaky containers 1_{UL}.

As force detector 9 different known detectors as e.g. Piezzo detectors may be used. In a today realized embodiment the force detector 9 includes a resistance strain gauge sensor as e.g. of the type Z6 as manufactured by Hottinger Baldwin Messtechnik GmbH, Germany.

With the today's realized embodiment for inline testing a stream of plastic material bottles sealingly closed with a foil-like member as was described an output rate is reached which is far above 600 bottles per minute. The extreme high output rate is primarily based on the very quick testing method in which squeezingly biasing of the containers 1 is established by a quick movement of the biasing members 5a and 5b up to their respective stops 8a and 8b as of fig. 1. Because according to fig. 11 more than one container, during their conveyance, are tested in parallelism the addressed high testing rate is even increased.

Further, the invention concerns a method for manufacturing unleaky closed containers with a first and a second flexible wall area having different flexibility characteristics wherein
- a closed container is provided;
- at least one biasing member is moved towards and onto one of said first and second flexible wall areas of said container;
- a biasing force on said container is monitored;
- said moving is stopped;
- said biasing force monitored is sampled resulting in a first force measuring signal at a first point in time;
- said biasing force monitored is sampled at least at one second subsequent point in time resulting in a second force measuring signal;
- a difference signal is generated in dependency of said first and second force measuring signals;
- said container is considered unleaky if said difference signal fulfils a test criterium and further comprising:
- moving said biasing member towards and onto said first flexible wall area;
- monitoring said biasing force at said second flexible area;
- sampling of said biasing force monitored resulting in said first measuring signal comprising determining a maximum force signal value having occurred during a time span up to and including said first point in time.

In one embodiment of the method according to the previous embodiment, the method further comprises the step of moving said biasing member up to a predetermined position with respect to said container.

In one embodiment of the method according to one of the previous method embodiments, said stopping is performed at least substantially at said first point in time.

In one embodiment of the method according to one of the previous method embodiments, the method further comprises selecting a predetermined time span and determining said maximum force value having occurred during said predetermined time span up to and including said first point in time.

In one embodiment of the method according to one of the previous method embodiments, said biasing comprises moving at least two biasing members towards and onto said first flexible wall area from opposite sides of said container.

In one embodiment of the method according to one of the previous method embodiments, the method further comprises said first flexible wall area is a wall area of a body of said container and said second flexible wall area is a sealing cover of an opening of said container body.

In one embodiment of the method according to one of the previous method embodiments, said second flexible area is a foil-like sealing cover of said opening.

In one embodiment of the method according to one of the previous method embodiments, the method further comprises monitoring said biasing force at said second flexible wall area along a force sensing surface spaced from said second flexible area at unbiased condition of said container by a predetermined amount which is substantially smaller than a maximum distance which said second flexible wall area may bow outwards due to an increased pressure in said container.

In one embodiment of the method according to one of the previous method embodiments, said monitoring comprises monitoring by means of a resistance gauge.

In one embodiment of the method according to one of the previous method embodiments, the method further comprises comparing said biasing force monitored at a third point in time previous to said first point in time with a threshold value and establishing a container as having a large leak if said force monitored does not at least reach said threshold value.

In one embodiment of the method according to one of the previous method embodiments, the method further comprises providing a multitude of said containers moving on a conveyor and performing said moving, stopping, monitoring, samplings and difference signal generating and considering on more than one of said moved containers on said conveyor.

In one embodiment of the method according to one of the previous method embodiments, the method further comprises comparing said force monitored at a third point in time previous to said first point in time with a threshold value and establishing a container as having no larger leak if said force monitored at said third point in time does at least reach said threshold value, averaging said force value monitored at said third point in time if said threshold value is at least realized, with such force values monitored at tested containers considered as having no large leak and applying said threshold value in dependency of a result of said averaging.

In one embodiment of the method according to one of the previous method embodiments, the method further comprises comparing said difference signal with a small-leakage indicative threshold value.

In one embodiment of the method according to the previous embodiment, the method further comprises the step of averaging said difference signal with such difference signals generated during previous testing of containers having been considered as unleaky and controlling said small-leakage indicative threshold value in dependency of the result of said averaging.

In one embodiment of the method according to one of the previous method embodiments, the method further comprises providing at least one force threshold value and comparing said force monitored with said threshold value, thereby updating said threshold value as a function of comparing result.

Further, the invention concerns a leak testing apparatus for leak testing a closed container with at least a fist and a second flexible wall area of different flexibility characteristics comprising:
- a biasing arrangement for compressing a container under test
- a force detector applicable to the wall of said container under test and generating an electric output signal; the output of said force detector being operationally connected to a storing unit; the output of said storing unit being operationally connected to one input of a comparator unit, the second input thereof being operationally connected to the output of said force detector and wherein said biasing arrangement is positioned for biasing the first flexible area of said container and said force detector is arranged to cooperate with the second flexible area of said container.

In one embodiment of the apparatus according to the previous embodiment, said biasing arrangement comprises at least two relatively movable biasing members, relatively movable in a plane and said force detector has a force sensing surface detecting forces substantially perpendicular to said plane.

In one embodiment of the apparatus according to one of the previous apparatus embodiments, said force detector comprises a resistance gauge.

In one embodiment of the apparatus according to one of the previous apparatus embodiments, said biasing arrangement comprises at least two relatively movable biasing members drivingly movable towards and from each others.

In one embodiment of the apparatus according to one of the previous apparatus embodiments, said biasing arrangement cooperates with a mechanical stop.

In one embodiment of the apparatus according to one of the previous apparatus embodiments, the output of said force detector is operationally connected to an input of a maximum value detecting unit.

In one embodiment of the apparatus according to one of the previous apparatus embodiments, the apparatus comprises a conveyor arrangement for a multitude of said containers and at least two of said biasing arrangement and force detector moving with said conveyor.

Further, the invention concerns a method for manufacturing unleaky closed containers with a first and a second flexible wall area of different flexibility characteristics, wherein
- a closed container is provided;
- at least one biasing member is moved relatively towards and onto one of said flexible wall areas of said containers;
- a biasing force on said container is monitored;
- said moving is stopped;
- said biasing force as monitored is sampled resulting in a first force measuring signal at a first point in time;
- said biasing force monitored is sampled at least at one second subsequent point in time resulting in a second force measuring signal;
- a difference signal is generated in dependency of said fist and second measuring signals as one leak indicative signal;
- an average signal of said difference signal as generated during previous testing of containers is updated if said container is unleaky and
- said difference signal is compared with at least one threshold signal, the at least one threshold signal being controlled in dependency of said average signal and further comprising:
- moving said biasing member relatively towards and onto said first flexible wall area;
- monitoring said biasing force on said second flexible wall area;
- sampling said biasing force monitored resulting in said first force measuring signal comprising determining a maximum force signal value having occurred during a time span up to and including said first point in time.
   Further, the invention concerns a method for manufacturing unleaky closed containers with a first and a second flexible wall area of different flexibility characteristics wherein
- a closed container is provided;
- at least one biasing member is moved relatively towards and onto one of said flexible wall areas of said container;
- a biasing force on said container is monitored;
- said moving is stopped;
- said biasing force monitored is sampled resulting in a first force measuring signal at a first point in time;
- said biasing force monitored is sampled at least at one second subsequent point in time resulting in a second force measuring signal;
- a difference signal is generated in dependency of said first and second measuring signals as a leak indicative signal;
- said monitored biasing force is sampled at a further point in time resulting in an actual further force measuring signal which is leak indicative, an average signal of further force measuring signals generated during preceding testing of unleaky containers is updated with said actual further force measuring signal if said force measuring signal is indicative of an unleaky container;
- said difference signal is compared with a threshold value dependent from said average signal;
- a container indicated as leaky is rejected;
   and further comprising:
- moving said biasing member relatively towards and onto said first flexible wall area;
- monitoring said biasing force on said second flexible area;
- sampling of said biasing force monitored resulting in said first force measuring signal comprising determining a maximum force signal value having occurred during a time span up to and including said first point in time.

Further, the invention concerns a method for manufacturing closed containers with a flexible wall portion comprising the steps of:
- providing a closed container;
- biasing said container;
- monitoring a biasing force on said container;
- detecting from said force monitored a maximum force value during a time span;
- storing a signal dependent on said maximum force value;
- comparing a signal dependent on said biasing force monitored with said stored signal;
- rejecting said container as leaky in dependency of a result of said comparing.

## Claims

1. A method for manufacturing unleaky closed containers with a first and a second flexible wall area having different flexibility characteristics wherein
• a closed container is provided;
• at least one biasing member is moved towards and onto one of said first and second flexible wall areas of said container;
• a biasing force on said container is monitored;
• said moving is stopped;
• said biasing force monitored is sampled resulting in a first force measuring signal at a first point in time;
• said biasing force monitored is sampled at least at one second subsequent point in time resulting in a second force measuring signal;
• a difference signal is generated in dependency of said first and second force measuring signals;
• said container is considered unleaky if said
difference signal fulfils a test criterium and further comprising:
• moving said biasing member towards and onto said first flexible wall area;
• monitoring said biasing force at said second flexible area;
• sampling of said biasing force monitored resulting in said first measuring signal comprising determining a maximum force signal value having occurred during a time span up to and including said first point in time,
wherein the biasing of said unleaky closed container comprises limiting the bowing outwards of said second flexible wall area.

2. The method of claim 1 further comprising monitoring said biasing force at said second flexible wall area along a force sensing surface spaced from said second flexible area at unbiased condition of said container by a predetermined amount which is substantially smaller than a maximum distance which said second flexible wall area may bow outwards due to an increased pressure in said container.

3. The method of claims 1 or 2 further comprising comparing said biasing force monitored at a third point in time previous to said first point in time with a threshold value and establishing a container as having a large leak if said force monitored does not at least reach said threshold value.

4. The method of one of claims 1 to 3 further comprising providing a multitude of said containers moving on a conveyor and performing said moving, stopping, monitoring, sampling and difference signal generating and considering on more than one of said moved containers on said conveyor.

5. The method of one of claims 1 to 4 further comprising comparing said force monitored at a third point in time previous to said first point in time with a threshold value and establishing a container as having no larger leak if said force monitored at said third point in time does at least reach said threshold value, averaging said force value monitored at said third point in time if said threshold value is at least realized, with such force values monitored at tested containers considered as having no large leak and applying said threshold value in dependency of a result of said averaging.

6. The method of one of claims 1 to 5 further comprising comparing said difference signal with a small-leakage indicative threshold value.

7. The method of claim 6 further comprising the step of averaging said difference signal with such difference signals generated during previous testing of containers having been considered as unleaky and controlling said small-leakage indicative threshold value in dependency of the result of said averaging.

8. The method of one of claims 1 to 7 further comprising providing at least one force threshold value and comparing said force monitored with said threshold value, thereby updating said threshold value as a function of comparing result.

9. A leak testing apparatus for leak testing a closed container with at least a fist and a second flexible wall area of different flexibility characteristics comprising:
- a biasing arrangement for compressing a container under test
- a force detector applicable to the wall of said container under test and generating an electric output signal; the output of said force detector being operationally connected to a storing unit; the output of said storing unit being operationally connected to one input of a comparator unit, the second input thereof being operationally connected to the output of said force detector and wherein said biasing arrangement is positioned for biasing the first flexible area of said container, **characterized in that** said force detector is arranged to limit the bowing outwards of the second flexible area of said container.

10. The apparatus of claim 9 wherein said biasing arrangement comprises at least two relatively movable biasing members, relatively movable in a plane and said force detector has a force sensing surface detecting forces substantially perpendicular to said plane.

11. The apparatus of claims 9 or 10 further comprising a conveyor arrangement for a multitude of said containers and at least two of said biasing arrangement and force detector moving with said conveyor.

12. A method for manufacturing unleaky closed containers with a first and a second flexible wall area of different flexibility characteristics wherein
• a closed container is provided;
• at least one biasing member is moved relatively towards and onto one of said flexible wall areas of said containers;
• a biasing force on said container is monitored;
• said moving is stopped;
• said biasing force as monitored is sampled resulting in a first force measuring signal at a first point in time;
• said biasing force monitored is sampled at least at one second subsequent point in time resulting in a second force measuring signal;
• a difference signal is generated in dependency of said fist and second measuring signals as one leak indicative signal;
• an average signal of said difference signal as generated during previous testing of containers is updated if said container is unleaky; and
• said difference signal is compared with at least one threshold signal, the at least one threshold signal being controlled in dependency of said average signal and further comprising:
• moving said biasing member relatively towards and onto said first flexible wall area;
• monitoring said biasing force on said second flexible wall area;
• sampling said biasing force monitored resulting in said first force measuring signal comprising determining a maximum force signal value having occurred during a time span up to and including said first point in time,
wherein the biasing of said unleaky closed containers comprises limiting the bowing outwards of said second flexible wall area.

13. A method for manufacturing unleaky closed containers with a first and a second flexible wall area of different flexibility characteristics wherein
• a closed container is provided;
• at least one biasing member is moved relatively towards and onto one of said flexible wall areas of said container;
• a biasing force on said container is monitored;
• said moving is stopped;
• said biasing force monitored is sampled resulting in a first force measuring signal at a first point in time;
• said biasing force monitored is sampled at least at one second subsequent point in time resulting in a second force measuring signal;
• a difference signal is generated in dependency of said first and second measuring signals as a leak indicative signal;
• said monitored biasing force is sampled at a further point in time resulting in an actual further force measuring signal which is leak indicative, an average signal of further force measuring signals generated during preceding testing of unleaky containers is updated with said actual further force measuring signal if said force measuring signal is indicative of an unleaky container;
• said difference signal is compared with a threshold value dependent from said average signal;
• a container indicated as leaky is rejected;
and further comprising:
• moving said biasing member relatively towards and onto said first flexible wall area;
• monitoring said biasing force on said second flexible area;
• sampling of said biasing force monitored resulting in said first force measuring signal comprising determining a maximum force signal value having occurred during a time span up to and including said first point in time,
wherein the biasing of said unleaky closed container comprises limiting the bowing outwards of said second flexible wall area.

14. A method for manufacturing closed containers with a flexible wall portion and a further flexible area, the method comprising the steps of
• providing a closed container;
• biasing said container;
• monitoring a biasing force on said container;
• detecting from said force monitored a maximum force value during a time span;
• storing a signal dependent on said maximum force value;
• comparing a signal dependent on said biasing force monitored with said stored signal;
• rejecting said container as leaky in dependency of a
result of said comparing,
wherein the biasing of said closed containers comprises limiting the bowing outwards of the further flexible area.

15. A method for testing closed containers with a flexible wall portion and a further flexible area, the method comprising the steps of
• providing a closed container;
• biasing said container;
• monitoring a biasing force on said container;
• detecting from said force monitored a maximum force value during a time span;
• storing a signal dependent on said maximum force value;
• comparing a signal dependent on said biasing force monitored with said stored signal;
• rejecting said container as leaky in dependency of a
result of said comparing,
wherein the biasing of said closed containers comprises limiting the bowing outwards of the further flexible area.
